# EUROPEAN PATENT SPECIFICATION

(11) **EP 0 530 027 B1**
(45) Date of publication and mention of the grant of the patent: **05.08.1998**
(21) Application number: 92307831.5
(22) Date of filing: 28.08.1992
(51) Int. Cl.: H04N 1/10

(54) **An image digitizing system**
Bilddigitalisierungssystem
Système de digitalisation d'une image

(30) Priority: 30.08.1991 US 753185
(43) Date of publication of application: 03.03.1993
(73) Proprietor: NIKON CORPORATION, Tokyo (JP)
(72) Inventor: Brandestini, Marco, Kirkland, Washington 98033 (US); Ferraro, Richard A., Seattle, Washington 98155 (US); Tazawa, Masashi, Kawasaki-shi, Kanagawa-ken (JP); Maeda, Eisaku, Sakura-shi, Chiba-ken (JP); Fujinawa, Nobuhiro, Yokohama-shi, Kanagawa-ken (JP); Ikeda, Osamu, Yokohama-shi, Kanagawa-ken (JP); Aikawa, Toshiya, Kawasaki-shi, Kanagawa-ken (JP)
(74) Representative: Burke, Steven David

(56) References cited:
- GB-A- 2 148 658
- US-A- 4 161 365
- US-A- 4 804 982
- PATENT ABSTRACTS OF JAPAN vol. 9, no. 173 (E-329) 18 July 1985 & JP-A-60 046 659 ( KONISHIROKU SHASHIN KOGYO K.K. ) 13 March 1985

## Description

### BACKGROUND OF THE INVENTION

### Field of the Invention

This invention relates to an apparatus for digitizing transparencies or negatives in a desk-top computer environment and, more particularly, to such an apparatus designed to accommodate images presented as individually mounted slides, negatives in strips, or roll material.

### Related Background Art

Image digitizers and their associated image processing workstations have grown in popularity. Individual graphic designers, advertisers, realtors and news reporters are incorporating this kind of image acquisition into their daily work. These digitizers or scanners are typically connected to computers for use in conjunction with desk-top publishing programs.

In addition, an image digitizer can be installed in a color copier, color printer, color facsimile machine or portable image transmission system. Further, a large part of the proofing can be accomplished by digitizing and sending the film data to a monitor.

A user typically purchases a scanner based upon cost, ease of use, performance and reliability. Desirable features are that it should not occupy considerable desk space. It should provide high performance, but still be affordable. If the decision is for a transparency scanner, the unit should be able to process negatives in their native format, namely uncut strips of 4 to 6 frames. Some users, such as stock photography houses, art galleries or museums, have a need to digitize large numbers of images for cataloging, archiving, or transmission over telephone lines.

GB-A-2148658 describes an apparatus for scanning a strip of film using a line sensor. The strip of film is mounted on an X-Y stage which is movable in vertical and horizontal directions, by means of a manual dial. In order to read the image, after the optical equipment has been arranged, the line sensor is gradually scanned across the image by means of a feed screw driven by a motor via an arrangement of gears.

### SUMMARY OF THE INVENTION

It would be beneficial to both accept and eject media through a front loading opening in a convenient manner.

According to the present invention there is provided an image digitizing system for reading an image of an original to be digitized, comprising an original holding member for holding said original and having an opening to be used for reading said original, and drive means for use when said original is read,
characterised in that:
said original holding member is reciprocally movable by said drive means in use, from a first position to a second position and back to said first position along a drive path perpendicular to the optical axis of said original held in said original holding member; and in that
said system further comprises an ejecting means for ejecting, in the process of the movement of said original holding member reaching said second position after completion of reading said original, a portion of the original from the original holding member along said drive path in the direction of said first position relative to said original holding member so that said portion, when reaching said first position, is projected from one end of said original holding member.

The system is preferably provided with focussing means for focussing the image by moving the original holding member in an axial direction substantially perpendicular to a plane of the original.

As described above, according to the image digitizing system of the present invention, an original can be ejected out of the original holding member easily upon completion of the reading of the original. Also, when said image digitizing system has the focussing means, an image of the original in the original holding member can be focussed on a line sensor.

### BRIEF DESCRIPTION OF THE DRAWINGS

A preferred embodiment of the present invention is described in detail below with reference to the accompanying drawings, in which:
Figure 1 is a fragmentary diagrammatic perspective view of a transport mechanism according to the invention, including a motor/drive assembly;
Figure 2A is a diagrammatic perspective view of an outer part of a slide jacket which is a component of the mechanism of Figure 1, including structure which provides angular adjustment and automatic ejection of a slide;
Figure 2B is a diagrammatic perspective view of an ejector and tilt bar which are components of the slide jacket of Figure 2A;
Figure 3 is a fragmentary diagrammatic perspective view of a cam arrangement with manual and servo control allowing fine focus adjustments;
Figure 4 is a diagrammatic perspective view which shows an adaptor used to handle negatives in strips;
Figures 5A to 5C are cross-sectional diagrammatic views showing an eject mechanism of a film in response to a movement of a carriage;
Figure 6 is a fragmentary diagrammatic perspective view of another embodiment of the transport mechanism and the fine focus adjustment mechanism; and
Figure 7 is a cross-section diagrammatic view showing a focussing mechanism according to the other embodiment of the invention.

### DETAILED DESCRIPTION OF THE PREFERRED EMBODIMENTS

A proposed system for the rapid scanning of colour images includes mechanical, optical and electrical portions. The present invention relates to an improved mechanical arrangement for handling film which bears images to be digitized. The optical and electrical portions are therefore not described herein in detail.

In practice, transparencies or slides 200 are typically framed in 50 x 50 millimeter mounts, while negatives are typically processed in strips of 4, 5 or 6 images. The preferred embodiment is disclosed with reference to these specific formats, but it will be recognized that the invention can be used with other formats.

### Drive Mechanism

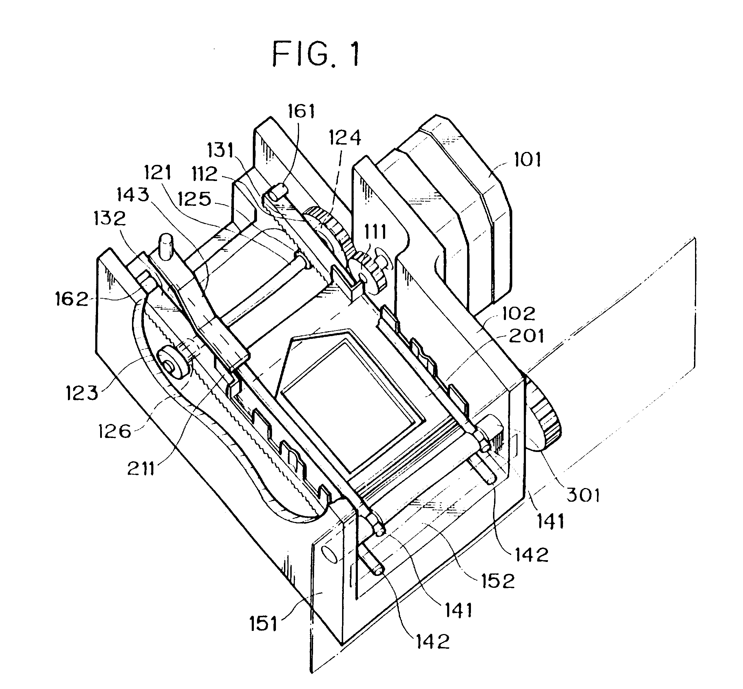

Attention is now drawn to Figure 1, which illustrates pertinent mechanical parts of the system. A conventional stepper motor 101 is secured to a flange of a housing 102 which accommodates the entire scanning apparatus. Electrical components and optical components such as a light source, various mirrors, an imaging lens and a detector array have been omitted for clarity. The motor 101 has a shaft bearing a small gear 111, which meshes with a larger idler gear 112 fixedly secured to a shaft 121. The gears 111 and 112 could alternatively be replaced with a friction drive or an arrangement employing a belt and pulleys. The idler gear 112 rotatably drives the shaft 121, which is rotatably supported on the housing by two bearings 123 and 124. The shaft 121 also carries two pinions 125 and 126 which each mesh with a respective longitudinally movable rack 131 or 132. The two racks are rigidly connected to a transport carriage 201.

The transport carriage 201 is guided for reciprocal movement by a guide arrangement of rods 141-142 and bearings, which is equivalent to that disclosed in the above-mentioned prior applications. The guide arrangement is therefore described only briefly here. In particular, a pair of upper rods 141 are disposed above and extend approximately parallel to a pair of lower rods 142. The ends of the upper rods 141 remote from the front panel 151 are supported by the carriage which has its racks 131 and 132 supported by the pinions 125 and 126, which permits the ends of rods 141 adjacent the front panel 151 to move vertically a small amount. The lower rods 142 are supported at their ends adjacent the front panel by not-illustrated springs of the type disclosed in the above-mentioned prior patent, so that the ends adjacent to the front panel can move vertically a small amount. The transport carriage 201 includes an upper shell 201a having spaced bushing-like bearings slidably supported on the upper rods 141, and a lower shell 201b having spaced bushing-like bearings slidably supported on the lower rods 142. The upper rods 141 are each biased downwardly by a respective spring, one of which is shown in Figure 1 at 143, thereby also urging the carriage downwardly so that the racks 131 and 132 are urged downwardly against the pinions, which in turn ensures that the gear teeth of the racks and pinions are fully in engagement without any significant play in order to provide zero backlash.

In the preferred embodiment the transport has the following pitch:
Motor 3.6° per full step
Idler gear ratio 1:3
Number of pinion teeth = 12 with a 0.3 (metric) module
Driving the stepper with 32 mini-steps per 360 electrical thus yields a 0.15° rotation of the pinion per mini-step, and a 5 micron per mini-step feed resolution for the carriage.

The drive system provides enough friction so that, in conjunction with the gear ratio, the carriage 201 will remain in a fixed position even if the motor is not energized. This allows manual insertion of a slide 200 whenever the carriage is in its home position nearest the front panel 151, even if the motor has no power.

The pinions 125 and 126 act as a pivot axis about which the racks can rotate. This pivot axis and the pivot provided by a focussing cam 301 ensure that piece of film being digitized is always kept at a uniform height regardless of variations in the thickness of the frames in which different pieces of film are mounted. The carriage assembly 201 is limited in its forward travel by the front panel 151. As to the rearward travel, there is no direct limit on rearward travel of the carriage itself, but rearward travel of an ejector 211 is limited by a pair of claws 161 and 162 on the housing which can engage the ejector 211 of the carriage.

### Eject Operation

In order to perform a scanning operation, the entire slide 200 is pushed into the unit through a narrow slotlike passageway or opening 152 in the front panel 151. This opening is kept small in order to positively key the slide to the proper position, to minimize the entry of dust, and to protect the detector array from ambient light. Once the slide is inside the scanning apparatus, it is inaccessible to the user. A mechanism must therefore be provided to eject the slide at the end of scanning.

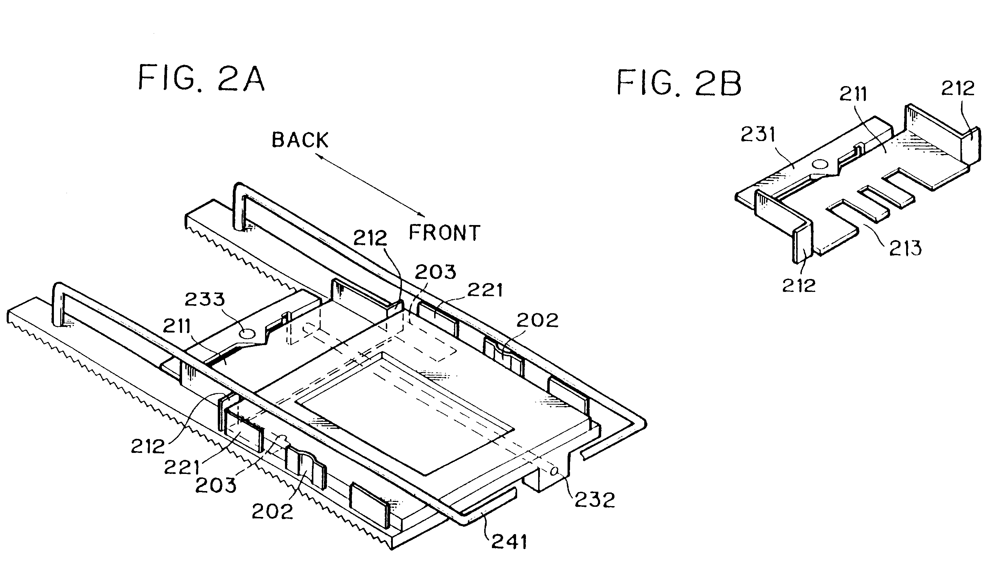

Figure 2A illustrates the eject mechanism. The above-mentioned ejector 211 (Fig. 2B) is located inside a slide jacket 221. The ejector 211 carries stops 212, against which the slide is seated. When a slide is manually inserted, the slide pushes stops 212 and ejector 211 rearwardly. The final position of the stops is determined by a tilt bar 231, which is described below.

During scanning of a slide, the motor 101 moves the carriage 201 far enough to expose the entire slide image to the optical components, so that the system can digitize the entire image field. Typically, this travel is 36 mm. If the user has specified via software that the slide is to be ejected, the software causes the control circuit to control the motor so as to move the carriage 201 an additional 14 mm. At the start of this over-travel, the ejector 211 engages the claws 161 and 162, which are part of the housing 102. The carriage 201 will thus continue its travel while the ejector 211, the stops 212 and the slide are held in a predetermined place. The ejector 211 is held in a predetermined place vertically and sideways by its shape, which mates with the shell of the carriage 201. Along the axis of travel the ejector can travel approximately 14 mm. Forward travel is limited by a cutout 203 (Figure 2) provided in the carriage assembly, and rearward travel by a tilt bar 231. The stationary slide is therefore pushed partially out of the carriage 201 by the amount of carriage over-travel. When the transport direction is then reversed and the carriage is brought to its home position adjacent front panel 151, the slide will extend out of the opening 152 by the amount of over-travel. The operator can thus comfortably remove it from the unit. The ejector is manually returned to its original position when a new slide is manually inserted.

The ejector 211 has several elongate slits 213. The pattern in which slits 213 are arranged is used as a code to differentiate whether the ejector or the slide frame is in the optical path, and allows the system to determine if the carriage is loaded with a slide. In particular, when the carriage is in its home position, the region which is imaged onto the detector array corresponds to a line extending across the portion of the ejector 211 which has the slits 213, and the system can examine the detected image for a pattern of bright and dark line segments corresponding to the slits. If the detector array senses black in this part of the image, a slide must be in the carriage since the slide mount will obstruct the optical path. If no slide has been inserted, either zero attenuation (i.e. maximum light source intensity) or the code pattern of the ejector (pattern of light and dark line segments) is detected.

On power-up, an eject operation is automatically executed to eject any slide which might have been left in the carriage inadvertently or which might be stuck because of a hang-up.

### Emergency Ejector

Since it is always conceivable that power might suddenly fail completely during system operation, the apparatus also features a manual emergency ejector 241, which is shown in Figure 2. The emergency ejector is seated in a recess in the front panel 151 and is thus accessible from the outside. In the case of a crash, the carriage 201 could be located in any position along its path of travel. The emergency ejector 241 pulls the carriage 201 all the way forward to its home position against the front panel 151. Since the emergency ejector 241 engages the ejector stops 212, the slide will extend out of the opening 152 in the front panel.

### Rotational Adjustment

For many applications, the exact orientation of the slide is not critical. For these applications, the edges of the window in the slide mount are a sufficient reference for the horizontal and vertical major axes. In some applications, however, the image orientation is more critical. For example, technical, architectural and product images often require precise angular orientation.

Since software rotation is very time-consuming and can degrade the image quality, the present invention avoids software rotation by providing precise mechanical adjustment of the angular orientation before scanning. Figure 2 is again used for the purpose of illustration. The sidewalls of the jacket 221 have been formed to provide a wide slide receiving channel (about 52 mm in the preferred embodiment) for easy slide insertion. At the center of each side of the jacket is a convex protrusion 202, the distance between the two protrusions 202 being substantially the exact width of a slide frame. The protrusions 202 thus center the slide, while permitting it to be rotated a few degrees about a central vertical axis.

The ejector stops 212, which positively position the slide, are not fixed in their location relative to the carriage but are capable of some limited adjustment. This adjustment is effected by the tilt bar 231 which defines the angular position of the ejector 211 and thus of the stops 211 thereon. This tilt bar is pivotally supported on the slide jacket by a vertical rivet 233, which gives the tilt bar the ability to pivot a few degrees about a vertical axis. The angular orientation of the tilt bar can be adjusted by a screw 232 which is rotatably supported on and extends the length of the outer slide jacket, which is held against axial movement relative to the slide jacket, and which threadedly engages a threaded hole in a flange of the tilt bar 231 at a location spaced radially from the rivet 233. When the carriage is in its home position, the head of this screw becomes accessible from the outside through a small hole in the front panel.

The operator uses this feature in the following manner. The image is scanned in the normal position. If a critical reference line appears tilted in the resulting digitized image, the user will measure the angle of tilt in the image, either with a software tool or with a conventional ruler or protractor. The adjustment is calibrated by providing one degree of tilt per single full screw rotation. With this capability, the slide or negative carrier can be accurately aligned to the sensor when positively seated against the stops.

In a simplified alternative version of this arrangement, the ejector 211 could rest against the rivet 233 without the provision of the adjustment screw 232. While not providing calibrated rotational adjustment, this still allows the slide to be rotated about its center.

### Fine Focus/Autofocus

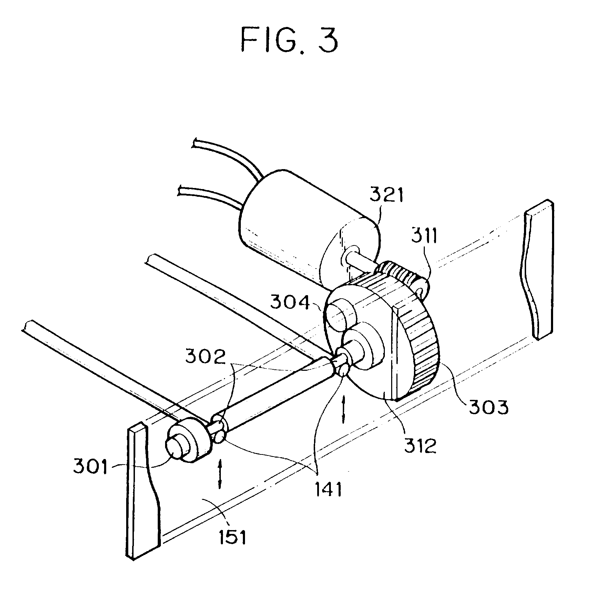

The focusing arrangement is illustrated in Figure 3. The interaction of the upper rods 141 and lower rods 142 with the transport carriage 201 ensures that most slides do not need any focusing adjustment. Regardless of the thickness of the mount, the film is always kept vertically centered. However, if the user is scanning glass-mounted slides, the optical path will be lengthened. There are also some exotic mounts in which the film is not centered. Additionally, one might want to purposely defocus the image for special effects. For these cases, a manual and motorized focus control is provided.

In the preferred embodiment, focussing is accomplished by adjusting the height of the front ends of the upper rods 141. These rods are supported at their front ends in respective grooves 302 machined into an elongate focussing cam member 301 which is supported on housing 102 for rotation about its lengthwise axis, the grooves 302 being eccentric to the axis of rotation. The focussing cam member can be rotated manually by a focus knob 303 which projects through a slot in the front panel 151. The focus knob 303 has a stop 304 which can engage the front panel 151 to limit its rotation. The film can be raised or lowered approximately 1 millimeter by cam member 301. It is further possible to couple the cam member 301 through a friction clutch 312 having a pinion to a worm gear 311 driven by a stepper motor 321, allowing for automatic focusing.

### Adaptor for Negative Strips

The use of a transparency digitizer for the purpose of scanning negatives is highly desirable. While slides are framed in 50 x 50 mm mounts, negatives are typically kept as film strips of up to six frames per strip. This format is advantageous for both archiving and handling. A scanning system which required cutting and mounting of individual negative frames would be disadvantageous and undesirable.

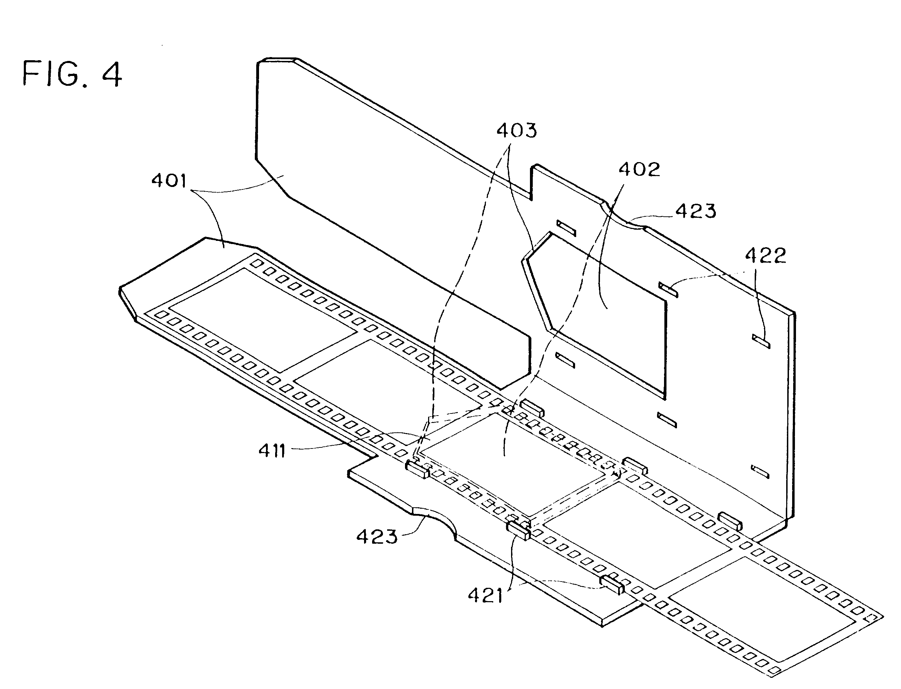

The preferred embodiment has been designed to accommodate film strips, in the following manner. As shown in Figure 4, an adaptor 401 can support a negative strip and can be inserted into the scanning apparatus. This adaptor has a central area which resembles a slide mount, in that it has a 24 x 36 mm opening 402. The user centers the particular frame of the film strip to be scanned within this opening. The first three frames of a six-frame strip can be scanned in their proper orientation. The length of the scanner allows it to receive only about half of the length of the film strip, and therefore to scan the remaining three frames the strip is physically reversed in the adaptor 401. Images will thus be scanned from the reverse strip upside down, and after scanning the resulting image has to be flipped digitally so that the data is in the proper format. Software capable of flipping a digital image is known and is not a part of the present invention, and therefore is not described here in detail. As shown in Figure 4, the opening 402 has at one end a triangular extension 403. This extension exposes a border area 411 of the film located between two frames. Before digitization of the image data, the scanning apparatus can sample the density in this unexposed area to establish a black reference.

The rear portion of the adaptor, which is inserted first into the scanning apparatus, is 40 mm wide, which is enough to accept the 35 mm film width but also leaves 5 mm on either side for retention by the ejector stops 212 (Figure 2). The rear portion has a length sufficient to accommodate two additional frames beyond the frame being scanned. The opposite or front end of the adaptor is long enough so that a part of it always projects out of the scanning apparatus to protect the film in any position, and has the width of a standard slide mount, namely 50 mm. The adaptor 401 has upper and lower shells or plates, the lower shell having upwardly projecting pins 421 which mate with holes 422 in the upper shell to facilitate the alignment of the negative strip by virtue of the pins on opposite sides or the opening 402 being spaced by a distance which is the width of a standard film strip. The upper and lower shells of the adaptor are pivotally coupled for ease of handling, for example by a hinge. Offset cutouts 423 in the upper and lower shell of the adaptor along an edge of each opposite from the hinge facilitate opening of the carrier.

This or a similar adaptor can also be used to manage single unmounted slide frames, or other transparent material such as dental X-ray films or glass microscope slides.

Inside the scanning apparatus, two important features facilitate use of the adaptor 401. Referring to Figure 1, the stops 212 which positively orient the slide mount are spaced by a distance sufficient for film and carrier to pass. Also, there must be enough depth clearance toward the rear to allow unobstructed passage for the length of the adaptor. Typically, the adaptor penetrates into the scanning apparatus beyond the scanning area by at least two additional frames of 38 mm each.

Although a particular preferred embodiment of the invention has been disclosed in detail for illustrative purposes, it will be recognized that variations or modifications of the disclosed apparatus, including the rearrangement of parts, lie within the scope of the present invention.

In this regard, it will be recognized that the apparatus and method described above are directly applicable to a variety of image digitization tasks including different formats, monochrome films and even opaque originals. The preferred embodiment applies them specifically to the digitization of 35 mm color transparencies or negatives, but this is not to be considered limiting.

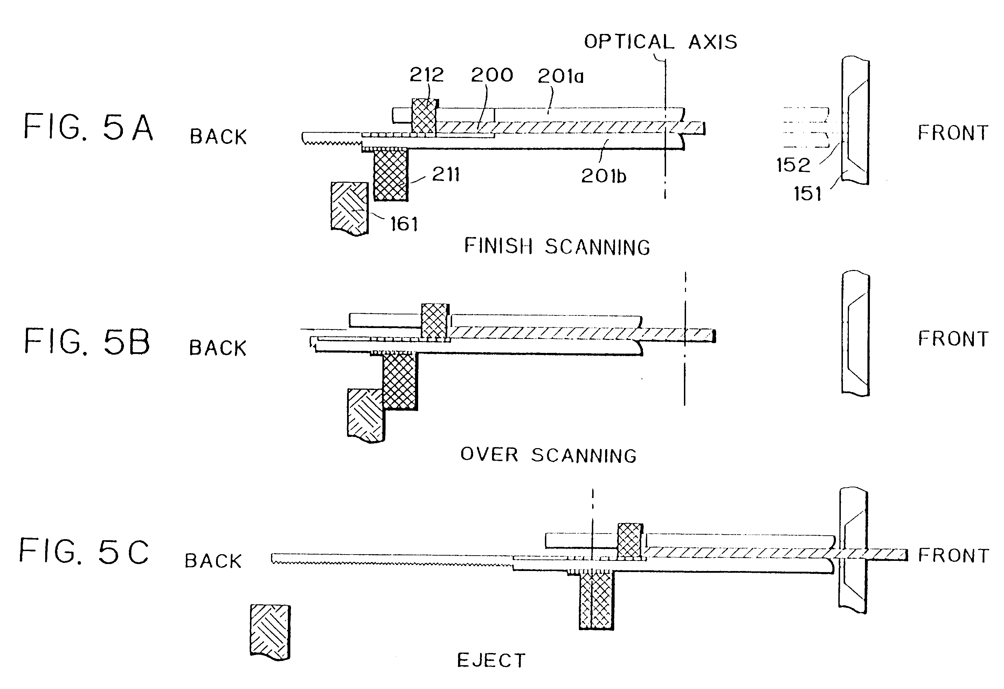

The eject mechanism described with Figure 2 will be described in full with reference to Figures 5A to 5C.

Note that the ejector 211 and the claw 161, which are protruding upwardly from the carriage 201 in Figure 2, are protruding downwardly in Figures 5A to 5C.

Figure 5A illustrates a state before the slide 200, which is housed in the carriage 201, and the claw 161 which is part of the housing collides with the the ejector 211, i.e., a state after the reading of the image data is completed.

Figure 5B illustrates a state in which the carriage 201 has been driven by the motor to travel further rearwardly from the state in Figure 5A. Even if the claw 161 collides with the ejector 211, the carriage 201 continues to travel rearwardly further. On the other hand, the ejector 211 remains at the fixed position since it engages the claw 161. Therefore, the slide 200 which is in contact with the stop 212 of the ejector 211 also remains at the fixed position. Thus, the slide 200 is relatively displaced from the carriage 201 forwardly.

Figure 5C is a view showing a state in which the carriage 201 has been driven by the motor to travel toward the front panel direction from the position in Figure 5B. Since the slide 200 is relatively displaced in a forward direction from the carriage 201, when the carriage 201 reaches the edge of the front panel direction by the driving of the motor, the slide 200 is protruding from the opening 152. Therefore, the operator can remove the slide from the unit.

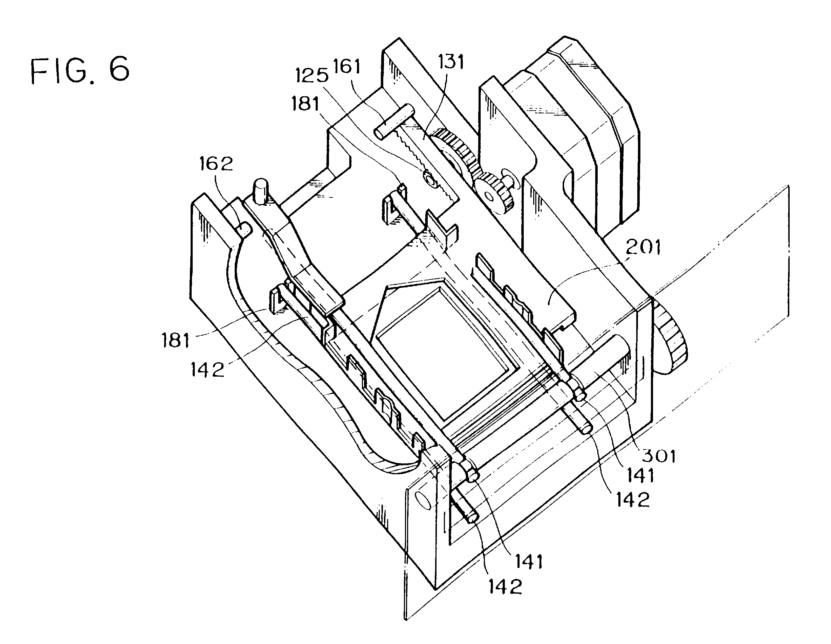

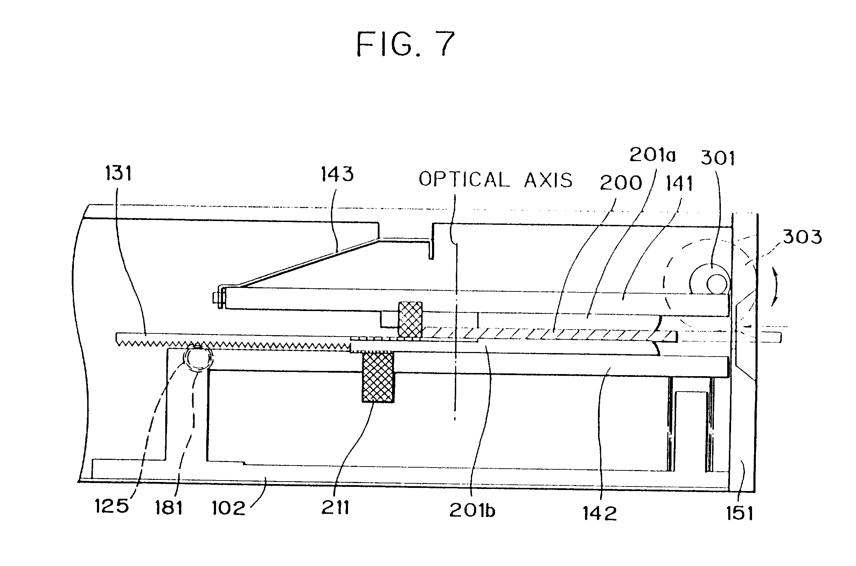

Another embodiment will be described next. When an image is read only in one direction so that there is no problem of backlash, a drive mechanism as shown in Figure 7 can be provided. The embodiment in Figure 1 employs two racks and two pinions. However, the embodiment shown in Figure 6 has only one rack and one pinion in a set, pivoting upon one end of paired lower rods. Different portions from the embodiment in Figure 1 will be specifically explained below.

One rack 131 is formed on the carriage 201. A pinion 125 which engages said rack 131 is disposed. Since the rack is arranged on one side of the carriage, it is no longer necessary to adjust engagement and engaging positions between the racks and pinions on the both sides as in the previous embodiment, which results in a simple assembling and adjustment. Also, very high precision is not required for gears and parts for installing the gears.

In the present embodiment, rear end of the lower rod 142 (at a far position from the opening) is arranged to be in contact with a lower rod receiving portion 181. Focusing is accomplished by using a contact point between said lower rod and the lower rod receiving portion as a fulcrum for rotation.

Full description will be made with reference to Figure 7. An upper carriage 201a is brought into contact with an upper rod 141. A slide 200 is inserted between said upper carriage 201a and a lower carriage 201b. The lower carriage 201b is in contact with the lower rod 142. When the upper rod 141 is biased downwardly by a spring 143, the lower rod 142 is biased downwardly through the upper carriage 201a, the slide 200 and the lower carriage 201b. Therefore, the lower rod 142 is biased to the lower rod receiving portion 181 of the housing 102. In this case, a position of engagement between the rack 131 and the pinion 124 and a position at which the end of the lower rod 142 is in contact with the lower rod receiving portion 181 are approximated to each other in the longitudinal direction and the vertical direction. Thus, even when the focusing position is vertically moved by a cam member 301, backlash between the rack 131 and the pinion 125 does not change.

Therefore, when a focus knob 303 is rotated, the focusing position of the slide 200 changes by using the lower rod receiving portion 181 as a fulcrum for rotation.

## Claims

1. An image digitizing system for reading an image of an original (200) to be digitized, comprising an original holding member (201) for holding said original and having an opening to be used for reading said original, and drive means (101, 111, 112, 121, 125, 126, 131, 132) for use when said original is read,
characterised in that:
said original holding member (201) is reciprocally movable by said drive means (101, 111, 112, 121, 125, 126, 131, 132) in use, from a first position to a second position and back to said first position along a drive path perpendicular to the optical axis of said original (200) held in said original holding member (201); and in that
said system further comprises an ejecting means (211, 212, 231) for ejecting, in the process of the movement of said original holding member (201) reaching said second position after completion of reading said original, a portion of the original from the original holding member (201) along said drive path in the direction of said first position relative to said original holding member so that said portion, when reaching said first position, is projected from one end of said original holding member (201).

2. An image digitizing system according to claim 1, wherein said original holding member (201) consists of two plate members (201a, 201b), each having said opening and accommodating said original between said two plate members, said ejecting means (211,212) consists of a moving member (211,212) which is movably arranged along said plate members (201a, 201b) and contacts an edge of said original (200) when held between said plate members, and said moving member (211,212) interlockingly moves in relation to said original holding member (201) in a direction opposite to the movement of said original holding member in order to eject said portion of said original out of said original holding member (201) upon completion of reading said original (200).

3. An image digitizing system according to claim 1 or 2, further comprising focussing means (301,302,303,321) for focussing the image by moving said original holding member (201) in an axial direction substantially perpendicular to the plane of said original (200).

4. An image digitizing system according to claim 3, further comprising:
guide means consisting of rods (141,142) extending in the direction of said reciprocal movement for guiding said original holding member, wherein said focussing means (301,302,303,321) performs focussing by moving one end of said guide means in said axial direction.

5. An image digitizing system according to claim 2, wherein at least one rack (131,132) is formed on at least one side portion of one of said plate members (201b), and said drive means comprises a pinion gear (125,126) which engages said rack and a motor (101) for driving said pinion gear.

6. An image digitizing system according to claims 3 and 5 or 4 and 5, wherein said focussing means displaces said original holding member (201) by using the point of engagement between said rack (131, 132) of said original holding member and said pinion gear (125, 126) of said drive means as a fulcrum, thereby performing said focussing adjustment.

7. An image digitizing system according to claims 4, 5 and 6, wherein said focussing means has a cam member (301) for displacing said one end of said guide means (141, 142).

8. An image digitizing system according to claim 7, wherein said focussing means comprises a motor (321) for driving said cam member (301).

9. An image digitizing system according to any of claims 1 to 8, further comprising rotation adjusting means (231,232,233) for performing rotational adjustment of said original (200) in said original holding member (201).

10. An image digitizing system according to any of claims 1 to 9, further comprising an adaptor (401) for placement in said original holding member (201), said adaptor being for holding an original in the form of a film strip and having an plurality of frames, and said adaptor has an opening (402) which corresponds with said opening of the original holding member (201).

11. An image digitizing system according to claim 10, wherein said adaptor opening (402) is formed to have an extension (403) allowing simultaneous exposure of one of said plurality of frames of said original (200) and a boundary (411) between said frames.

12. An image digitizing system according to claim 10 or 11, wherein said adaptor (401) has a supporting portion adjacent to said opening (402) for supporting two frames of said film strip.

13. An image digitizing system according to any of claims 1 to 12, wherein said ejecting means (211, 212, 231) comprises an optical signal generating portion (213), projecting partly into said opening of said original holding member (201) and overlaid by an inserted original whereby said system can optically detect whether or not an original is inserted into said original holding member (201).

14. An image digitizing system according to any of claims 1 to 13, further comprising a line sensor for reading said image of the original (200) in lines.

## Patentansprüche

1. Bild-Digitalisierungssystem zum Lesen eines Bilds eines Originals (200), das digitalisiert werden soll, das ein Original-Halteteil (201) zum Halten des Originals besitzt und eine Öffnung besitzt, die zum Lesen des Originals verwendet wird, und Antriebseinrichtungen (101, 111, 112, 121, 125, 126, 131, 132) zur Verwendung, wenn das Original gelesen wird,
dadurch gekennzeichnet, daß
das Original-Halteteil (201) durch die Antriebseinrichtung (101, 111, 112, 121, 125, 126, 131, 132), unter Verwendung, von einer ersten Position zu einer zweiten Position und zurück zu der ersten Position entlang eines Antriebspfads senkrecht zu der optischen Achse des Originals (200), das in dem Original-Halteteil (201) gehalten ist, hin- und herbewegbar ist; und daß
das System weiterhin eine Auswurfeinrichtung (211, 212, 231) zum Auswerfen, in dem Vorgang der Bewegung des Original-Halteteils (201), das die zweite Position nach Abschluß des Lesens des Originals erreicht, eines Bereichs des Originals von dem Original-Halteteil (201) entlang des Antriebspfads in der Richtung der ersten Position relativ zu dem Original-Halteteil aufweist, so daß der Bereich, wenn die erste Position erreicht wird, von einem Ende des Original-Halteteils (201) vorstehend ist.

2. Bild-Digitalisierungssystem nach Anspruch 1, wobei das Original-Halteteil (201) aus zwei Plattenteilen (201a, 201b) besteht, wobei jedes die Öffnung besitzt und das Original zwischen den zwei Plattenteilen aufnimmt, wobei die Auswurfeinrichtung (211, 212) aus einem Bewegungsteil (211, 212) besteht, das bewegbar entlang der Plattenteile (201a, 201b) angeordnet ist und eine Kante des Originals (200) berührt, wenn es zwischen den Plattenteilen gehalten ist, und sich das Bewegungsteil (211, 212) verriegelnd in Bezug auf das Original-Halteteil (201) in einer Richtung entgegengesetzt zu der Bewegung des Original-Halteteils bewegt, um den Bereich des Originals aus dem Original-Halteteil (201) unter Abschluß des Lesens des Originals (200) auszuwerfen.

3. Bild-Digitalisierungssystem nach Anspruch 1 oder 2, das weiterhin eine Fokussiereinrichtung (301, 302, 303, 321) zum Fokussieren des Bilds durch Bewegen des Original-Halteteils (201) in einer axialen Richtung im wesentlichen senkrecht zu der Ebene des Originals (200) aufweist.

4. Bild-Digitalisierungssystem nach Anspruch 3, das weiterhin aufweist:
eine Führungseinrichtung, die aus Stäben (141, 142) besteht, die sich in der Richtung der Hin- und Herbewegung zur Führung des Original-Halteteils erstrecken, wobei die Fokussiereinrichtung (301, 302, 303, 321) eine Fokussierung durch Bewegen eines Endes der Führungseinrichtung in der axialen Richtung durchführt.

5. Bild-Digitalisierungssystem nach Anspruch 2, wobei mindestens eine Zahnstange (131, 132) auf mindestens einem Seitenbereich eines der Plattenteile (201b) gebildet ist und wobei die Antriebseinrichtung ein Ritzelzahnrad (125, 126), das in die Zahnstange eingreift, und einen Motor (101) zum Antreiben des Ritzelzahnrads aufweist.

6. Bild-Digitalisierungssystem nach den Ansprüchen 3 und 5 oder 4 und 5, wobei die Fokussiereinrichtung das Original-Halteteil (201) unter Verwendung des Punkts eines Eingriffs zwischen der Zahnstange (131, 132) des Original-Halteteils und des Ritzelzahnrads (125, 126) der Antriebseinrichtung als ein Drehpunkt verschiebt, um dadurch die Fokussiereinstellung durchzuführen.

7. Bild-Digitalisierungssystem nach den Ansprüchen 4, 5 und 6, wobei die Fokussiereinrichtung ein Nockenteil (301) zum Verschieben des einen Endes der Führungseinrichtung (141, 142) besitzt.

8. Bild-Digitalisierungssystem nach Anspruch 7, wobei die Fokussiereinrichtung einen Motor (321) zum Antreiben des Nockenteils (301) aufweist.

9. Bild-Digitalisierungssystem nach einem der Ansprüche 1 bis 8, das weiterhin eine Dreheinstelleinrichtung (231, 232, 233) zum Durchführen einer drehmäßigen Einstellung des Originals (200) in dem Original-Halteteil (201) aufweist.

10. Bild-Digitalisierungssystem nach einem der Ansprüche 1 bis 9, das weiterhin einen Adapter (401) zum Plazieren des Original-Halteteils (201) aufweist, wobei der Adapter zum Halten eines Originals in der Form eines Filmstreifens dient und eine Vielzahl von Rahmen besitzt, und daß der Adapter eine Öffnung (402) besitzt, die der Öffnung des Original-Halteteils (201) entspricht.

11. Bild-Digitalisierungssystem nach Anspruch 10, wobei die Adapter-Öffnung (402) so gebildet ist, um eine Verlängerung (403) zu haben, die eine simultane Freilegung eines der Vielzahl der Einzelbilder des Originals (200) und eines Grenzbereichs (411) zwischen den Einzelbildern ermöglicht.

12. Bild-Digitalisierungssystem nach Anspruch 10 oder 11, wobei der Adapter (401) einen Tragebereich angrenzend an die Öffnung (402) zum Tragen von zwei Einzelbildern des Filmstreifens besitzt.

13. Bild-Digitalisierungssystem nach einem der Ansprüche 1 bis 12, wobei die Auswurfeinrichtung (211, 212, 231) einen ein optisches Signal erzeugenden Bereich (213) aufweist, der teilweise in die Öffnung hinein des Original-Halteteils (201) vorsteht und durch ein eingesetztes Original überlegt wird, wodurch das System optisch erfassen kann, ob ein Original in das Original-Halteteil (201) hinein eingesetzt ist oder nicht.

14. Bild-Digitalisierungssystem nach einem der Ansprüche 1 bis 13, das weiterhin einen Linien-Sensor zum Lesen des Bilds des Originals (200) in Linien aufweist.

## Revendications

1. Système de numérisation d'image destiné à lire une image d'un original (200) à numériser, comprenant un organe (201) de support de l'original, ayant une ouverture destinée à être utilisée pour la lecture de l'original, et un dispositif d'entraînement (101, 111, 112, 121, 125, 126, 131, 132) destiné à être utilisé lorsque l'original est lu,
caractérisé en ce que
l'organe (201) de support d'original est mobile en translation sous la commande du dispositif d'entraînement (101, 111, 112, 121, 125, 126, 131, 132) pendant l'utilisation, d'une première position à une seconde position, puis à nouveau à la première position le long d'un trajet d'entraînement perpendiculaire à l'axe optique de l'original (200) supporté dans l'organe de support d'original (201), et en ce que
le système comporte en outre un dispositif (211, 212, 231) d'éjection, pendant le déplacement de l'organe de support d'original (201) qui atteint la seconde position après la fin de la lecture de l'original, d'une partie de l'original de l'organe de support d'original (201) le long du trajet d'entraînement dans la direction de la première position par rapport à l'organe de support d'original afin que ladite partie, lorsqu'elle atteint la première position, soit projetée par une première extrémité de l'organe de support d'original (201).

2. Système de numérisation d'image selon la revendication 1, dans lequel l'organe de support d'original (201) est constitué de deux organes en forme de plaque (201a, 201b), ayant chacun l'ouverture et logeant l'original entre les deux organes en forme de plaque, le dispositif d'éjection (211, 212) est formé d'un organe de déplacement (211, 212) qui est destiné à être mobile le long des organes en forme de plaque (201a, 201b) et qui est au contact d'un bord de l'original (200) lorsqu'il est supporté entre les organes en forme de plaque, et l'organe de déplacement (211, 212) se déplace de manière solidarisée avec l'organe de support d'original (201) en sens opposé au sens de déplacement de l'organe de support d'original pour éjecter ladite partie de l'original de l'organe de support d'original (201) après la fin de la lecture de l'original (200).

3. Système de numérisation d'image selon la revendication 1 ou 2, comprenant en outre un dispositif (301, 302, 303, 321) de focalisation de l'image par déplacement de l'organe de support d'original (201) en direction axiale pratiquement perpendiculaire au plan de l'original (200).

4. Système de numérisation d'image selon la revendication 3, comprenant en outre :
un dispositif de guidage formé de tiges (141, 142) qui s'étendent dans la direction de déplacement alternatif pour le guidage de l'organe de support d'original, et le dispositif de focalisation (301, 302, 303, 321) effectue la focalisation par déplacement d'une première extrémité du dispositif de guidage dans la direction axiale.

5. Système de numérisation d'image selon la revendication 2, dans lequel une crémaillère au moins (131, 132) est formée sur au moins une partie latérale de l'un des organes en forme de plaque (201b), et le dispositif d'entraînement comporte un pignon (125, 126) en prise avec la crémaillère et un moteur (101) qui entraîne le pignon.

6. Système de numérisation d'image selon les revendications 3 et 5 ou 4 et 5, dans lequel le dispositif de focalisation déplace l'organe de support d'original (201) par utilisation du point de contact entre la crémaillère (131, 132) de l'organe de support d'original et le pignon (125, 126) du dispositif d'entraînement comme pivot, en réalisant de cette manière l'ajustement de focalisation.

7. Système de numérisation d'image selon les revendications 4, 5 et 6, dans lequel le dispositif de focalisation possède un organe de came (301) destiné à déplacer la première extrémité du dispositif de guidage (141, 142).

8. Système de numérisation d'image selon la revendication 7, dans lequel le dispositif de focalisation comporte un moteur (321) destiné à entraîner l'organe de came (301).

9. Système de numérisation d'image selon l'une quelconque des revendications 1 à 8, comprenant en outre un dispositif (231, 232, 233) d'ajustement de rotation destiné à exécuter l'ajustement en rotation de l'original (200) dans l'organe de support d'original (201).

10. Système de numérisation d'image selon l'une quelconque des revendications 1 à 9, comprenant en outre un adaptateur (401) destiné à être placé dans l'organe de support d'original (201), l'adaptateur étant destiné à supporter un original sous forme d'une bande de pellicule et ayant plusieurs images, l'adaptateur ayant une ouverture (402) qui correspond à l'ouverture de l'organe (201) de support d'original.

11. Système de numérisation d'image selon la revendication 10, dans lequel l'ouverture (402) de l'adaptateur est formée afin qu'elle ait un prolongement (403) permettant l'exposition simultanée de l'une des images de l'original (200) et d'une limite (411) entre les images.

12. Système de numérisation d'image selon la revendication 10 ou 11, dans lequel l'adaptateur (401) a une partie de support adjacente à l'ouverture (402) et destinée à supporter deux images de la bande de pellicule.

13. Système de numérisation d'image selon l'une quelconque des revendications 1 à 12, dans lequel le dispositif d'éjection (211, 212, 231) comporte une partie génératrice d'un signal optique (213) qui se projette partiellement dans l'ouverture de l'organe de support d'original (201) et qui est recouverte par un original inséré si bien que le système peut détecter optiquement si un original est inséré dans l'organe de support d'original (201) ou non.

14. Système de numérisation d'image selon l'une quelconque des revendications 1 à 13, comprenant en outre un capteur d'une ligne destiné à lire l'image de l'original (200) sous forme de lignes.
